# FASCICULE DE BREVET EUROPEEN

(11) **EP 1 244 317 B1**
(45) Date de publication et mention de la délivrance du brevet: **06.05.2015**
(21) Numéro de dépôt: 02290724.0
(22) Date de dépôt: 21.03.2002
(51) Int. Cl.: H04W 68/02, H04W 68/12, H04W 88/06

(54) **Coordination de l'envoi de messages de recherche dans un système de radiocommunications mobiles**
Koordinierung von Funkrufnachrichten in einem mobilen Funkübertragungssystem
Coordination of paging messages in a mobile radiocommunication system

(30) Priorité: 23.03.2001 FR 0103982
(43) Date de publication de la demande: 25.09.2002
(73) Titulaire: ALCATEL LUCENT, 92100 Boulogne-Billancourt (FR)
(72) Inventeur: Landais, Bruno, 22560 Pleumeur-Bodou (FR); Muniere, Vincent, 75015 Paris (FR)
(74) Mandataire: El Manouni, Josiane

(56) Documents cités:
- WO-A-01/10080

## Description

La présente invention concerne d'une manière générale les systèmes de radiocommunications mobiles.

D'une manière générale, dans ces systèmes, on peut distinguer deux types de services, les services en mode circuit et les services en mode paquet. Un exemple de services en mode paquet est le GPRS (pour "General Packet Radio Service" en anglais) pour les systèmes de radiocommunications mobiles de type GSM (pour "Global System for Mobile communications" en anglais).

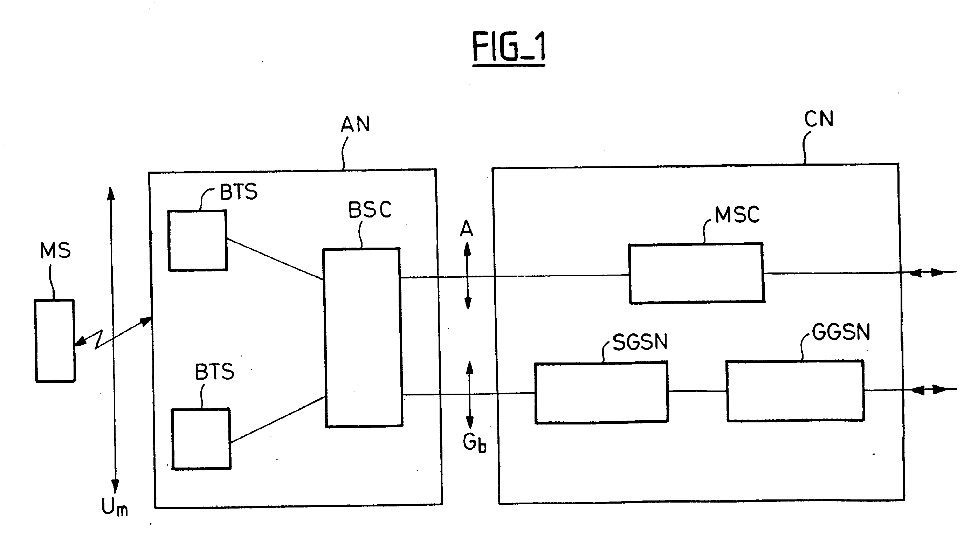

L'architecture des systèmes en mode paquet tels que par exemple les systèmes de type GSM/GPRS est rappelée sur la figure 1, elle comporte essentiellement :
- des stations de base ou BTS (pour "Base Transceiver Station" en anglais), en relation avec des stations mobiles ou MS (pour « Mobile Station » en anglais), et des contrôleurs de stations de base ou BSC (pour "Base Station Controller" en anglais), l'ensemble formé par les BTS et BSC étant aussi appelé BSS (pour "Base Station Subsystem" en anglais), ou plus généralement réseau d'accès (ou AN , pour « Access Network » en anglais) ;
- des entités telles que les entités SGSN (pour "Serving GPRS Support Node" en anglais), en relation d'une part avec le BSS, et d'autre part avec des entités GGSN (pour « Gateway GPRS Support Node » en anglais), elles-mêmes en relation avec des réseaux extérieurs (non illustrés).

L'interface entre MS et BSS est aussi appelée interface « Um », et l'interface entre BSC et SGSN est aussi appelée interface « Gb ».

Le BSS recouvre des fonctionnalités communes aux services en mode circuit et aux services en mode paquet, et des fonctionnalités propres aux services en mode paquet ; ces dernières sont supportées par une entité particulière du BSS, appelée PCU (pour « Packet Control Unit » en anglais), non illustrée spécifiquement sur la figure 1.

Pour les services en mode circuit, et comme rappelé également sur la figure 1, le BSS est raccordé à des réseaux extérieurs via une entité appelée aussi MSC (pour « Mobile Switching Center » en anglais). L'interface entre BSC et MSC est aussi appelée interface « A ». L'ensemble formé par les MSC (pour les services en mode circuit) et par les SGSN et GGSN (pour les services en mode paquet) est aussi appelé réseau de coeur, ou CN (pour « Core Network » en anglais).

Selon l'architecture en couches utilisée pour décrire ces systèmes, on distingue, sur l'interface « Um » entre MS et BBS:
- une première couche, ou couche physique,
- une deuxième couche, ou couche liaison, elle-même divisée en plusieurs couches: par ordre de niveaux croissants, MAC (pour « Médium Access Control » en anglais), RLC (pour « Radio Link Control » en anglais) et LLC (pour « Logical Link Control » en anglais).

De même, on distingue, sur l'interface « Gb » entre BSS et SGSN:
- une première couche, ou couche physique,
- une deuxième couche, ou couche liaison, elle-même divisée en plusieurs couches : par ordre de niveaux croissants, « Frame Relay » (en anglais), BSSGP (pour « BSS GPRS Protocol» en anglais), et LLC (pour « Logical Link Control » en anglais).

Des trames appelées trames LLC (ou « LLC frames » en anglais) sont formées, dans la couche LLC, à partir d'unités de données de niveau supérieur. Dans les trames LLC ces unités de données sont appelées unités de données LLC-PDU (pour « LLC-Protocol Data Units » en anglais).

Les unités de données LLC-PDU sont ensuite segmentées dans la couche MAC/RLC, de manière à former des blocs appelés blocs de données RLC (ou « RLC data blocks » en anglais). Les blocs de données RLC sont ensuite mis au format requis pour transmission sur l'interface « Um », dans la couche physique.

En outre, des protocoles de signalisation sont prévus, notamment pour la gestion des ressources radio ou RR (pour « Radio Resource Management » en anglais), la gestion de la mobilité ou MM (pour « Mobility Management» en anglais), la gestion de session ou SM (pour « Session Management» en anglais), le contrôle de lien logique ou LL (pour « Logical Link Control » en anglais), ...etc.

Pour une description détaillée de ces systèmes, on pourra par exemple se référer aux normes correspondantes, publiées par les organismes de normalisation correspondants.

On rappellle aussi que, selon le protocole de gestion de ressources radio, différents modes sont possibles pour une station mobile, en mode paquet :
- un mode dit « packet transfer mode » (en anglais), dans lequel des ressources sont allouées temporairement, lorsque des données sont effectivement à transmettre au cours d'une communication, ces ressources formant un canal virtuel temporaire ou TBF (pour « Temporary Block Flow » en anglais) permettant un transfert de données entre station mobile et réseau, pour un sens de transmission donné,
- un mode dit « packet idle mode » (en anglais), dans lequel aucun TBF n'est établi.

Par opposition, en mode circuit, le mode dans lequel des ressources sont allouées à une station mobile est appelé « dedicated mode » (en anglais), ces ressources étant alors des ressources dédiées allouées à la station mobile pour la durée de la communication.

A sa mise en marche, une station mobile est aussi dite en mode veille, ou « idle mode » en anglais.

En outre, selon le protocole de gestion de mobilité, on définit une procédure dite d' « attachement GPRS » (ou « GPRS Attach» en anglais), permettant à une station mobile de passer du mode « idle mode » à un mode dit « attaché GPRS » (ou « GPRS attached » en anglais), dans lequel elle peut accéder à des services GPRS. On définit aussi la procédure inverse de « GPRS Detach ». Une station mobile sera aussi dite en mode paquet entre le moment où elle accède à des services GPRS (par l'intermédiaire de la procédure de « GPRS Attach ») et le moment où elle n'y accède plus (par l'intermédiaire de la procédure de « GPRS Detach »).

Une station mobile en mode veille et non attachée GPRS communique avec le réseau par l'intermédiaire d'échanges de signalisation sur des canaux appelés CCCH (« Common Control CHannel »). Une station mobile attachée GPRS et en mode « packet idle mode» communique avec le réseau par l'intermédiaire d'échanges de signalisation sur des canaux appelés PCCCH (« Packet Common Control CHannel ») si de tels canaux sont prévus dans la cellule considérée, sinon par les canaux CCCH. Une station mobile attachée GPRS et dans le mode « packet transfer mode » communique avec le réseau par l'intermédiaire d'échanges de signalisation sur des canaux appelés PDCH (« Packet Data Channel »).

On rappelle que le canal de données PDCH inclut un canal de trafic ou PDTCH (« Packet Data Trafic Channel »), et un canal de signalisation ou PACCH (« Packet Associated Control CHannel »).

On rappelle aussi que le canal CCCH inclut lui-même un certain nombre de canaux tels que notamment un canal PCH (« Paging CHannel »), qui sera aussi appelé ici canal de recherche commun. De même le canal PCCCH inclut lui-même un certain nombre de canaux tels que notamment un canal PPCH (« Packet Paging CHannel ») qui sera aussi appelé ici canal de recherche paquet. La présente invention concernant plus particulièrement la recherche (ou « paging »), dans ce qui suit on appellera en fait indifféremment canal de recherche commun le canal PCH ou le canal CCCH, et de même on appellera indifféremment canal de recherche paquet le canal PPCH ou le canal PCCCH.

Pour le cas de station mobile supportant les deux types de services (en mode circuit et en mode paquet), simultanément ou alternativement selon les capacités de la station mobile, un message de recherche pour services en mode circuit (ou « Circuit Services paging message » ou encore « CS paging message » en anglais) est transmis à une station mobile en mode « packet idle mode » ou en mode « packet transfer mode », si une connexion en mode circuit doit être établie vers cette station mobile.

On prévoit alors avantageusement une coordination de recherche (ou « paging coordination »), ce qui signifie que le réseau envoie alors des messages de recherche pour services en mode circuit sur le même canal que celui utilisé pour envoyer des messages de recherche pour services en mode paquet, c'est-à-dire soit sur un canal dit de recherche GPRS ou « GPRS paging » (c'est-à-dire sur le canal de recherche paquet PCCCH s'il est prévu, ou sinon sur le canal de recherche commun CCCH), soit sur un canal de données GPRS (PDCH) si un tel canal a été alloué à la station mobile.

La norme 3G TS 23.060 distingue alors plusieurs modes de fonctionnement pour le réseau, qui sont rappelés ci-dessous :
- Mode I de fonctionnement du réseau (ou «Network operation mode I», encore appelé ici « NMO I ») : Le réseau envoie un message de recherche pour services en mode circuit (ou « CS paging message ») à une station mobile attachée GPRS, soit sur un canal dit de recherche GPRS ou « GPRS paging » (c'est-à-dire sur le canal de recherche paquet PCCCH s'il est présent, ou sinon sur le canal de recherche commun CCCH), soit sur un canal de données GPRS (PDCH) si un tel canal a été alloué à la station mobile. Ceci signifie que la station mobile a besoin d'écouter un seul des deux canaux de recherche PCCCH ou CCCH si aucun canal de données ne lui a été alloué, et si un canal de données GPRS lui a été alloué, alors elle reçoit ce message de recherche sur ce canal. Une coordination est donc effectuée par le coeur de réseau dans ce mode.
- Mode II de fonctionnement du réseau (ou « Network operation mode II», encore appelé ici « NMO II ») : Le réseau envoie un message de recherche pour services en mode circuit (ou « CS paging message ») à une station mobile attachée GPRS, sur le canal de recherche commun CCCH, et ce canal est aussi le canal de recherche GPRS (le canal de receherche paquet n'étant pas prévu dans la cellule considérée). Ceci signifie que la station mobile a seulement besoin d'écouter le canal de recherche commun CCCH, mais qu'elle peut écouter ce canal même si un canal de données GPRS lui a été alloué. Il est donc considéré qu'il n'y a pas de coordination dans ce mode.
- Mode III de fonctionnement du réseau (ou «Network operation mode III», encore appelé ici NMO III) : Le réseau envoie un message de recherche pour services en mode circuit (ou « CS paging message ») à une station mobile attachée GPRS, sur le canal de recherche commun CCCH, et envoie un message de recherche pour services en mode paquet (ou « PS paging message ») sur le canal de recherche GPRS, c'est-à-dire soit sur le canal de recherche paquet PCCCH (s'il est prévu dans la cellule considérée) soit sur le canal de recherche commun CCCH (dans le cas contraire). Ceci signifie qu'une station mobile en mode « packet idle mode » qui veut recevoir à la fois des messages de recherche pour des services en mode circuit et des messages de recherche pour des services en mode paquet doit écouter ces deux canaux de recherche (commun et paquet) si un canal de recherche paquet est prévu dans la cellule considérée. Par ailleurs une station mobile en mode « packet transfer mode » peut aussi écouter le canal de recherche commun pour ne pas perdre de messages de recherche pour services en mode circuit. Aucune coordination n'est donc effectuée par le réseau dans ce mode.

Le réseau fonctionne en mode « NMO I » lorsqu'une interface appelée interface « Gs », est prévue entre les entités MSC et SGSN. Dans ce cas les messages de recherche pour services en mode circuit, originaires du MSC et destinés à une station mobile attachée GPRS, empruntent un chemin qui passe par le SGSN. En effet, grâce à l'interface « Gs » le MSC peut savoir si une station mobile est attachée GPRS. Si elle n'est pas attachée GPRS, le message de recherche pour services en mode circuit est transmis au BSS via l'interface A. Si elle est attachée GPRS, le message de recherche pour services en mode circuit est transmis au SGSN via l'interface « Gs », puis retransmis du SGSN à l'entité PCU du BSS via l'interface « Gb ». Le PCU peut alors envoyer ce message sur le canal adéquat, soit :
- le canal PACCH si la station mobile est dans le mode « packet transfer mode »,
- le canal PCCCH si la station mobile est dans le mode « packet idle mode » et si un tel canal est prévu dans la cellule considérée
- le canal CCCH si la station mobile est dans le mode « packet idle mode » et si un canal PCCCH n'est pas prévu dans la cellule considérée.

La présence de l'interface « Gs » entraîne cependant un certain nombre de contraintes. Notamment cela implique d'utiliser de nouvelles procédures de gestion de mobilité ou MM (« Mobility Management ») pour le cas de services en mode circuit. En effet, comme spécifié dans la norme 3G TS 23.060, des procédures MM combinées circuit/paquet doivent alors être supportées, ce qui pourrait remettre en cause la qualité de service pour les services en mode circuit. Par ailleurs aucun système comportant une interface « Gs » n'étant encore commercialement disponible, des défauts d'implémentation ne sont pas à exclure dans les premiers temps. Pour ces raisons, certains opérateurs ont exprimé leur souhait de ne pas déployer une telle interface.

Un besoin existe alors pour une coordination du « paging » sans utiliser une telle interface, c'est-à-dire pour une coordination du « paging » par le BSS.

La norme 3G TS 04.60 dans son état actuel prévoit que le « paging » en utilisant le canal PACCH s'applique lorsqu'un message de « paging » est envoyé à une station mobile qui est attachée GPRS, lorsque cette station mobile est en mode « packet transfer mode » et lorsque le réseau est capable de coordonner la requête de « paging » avec les ressources radio allouées à la station mobile sur un canal PDCH. Il est en outre spécifié que ce type de coordination du « paging » doit être prévu dans le mode « NMO I » (cf. 3G TS 23.060), et que la station mobile doit supposer que ce type de coordination de « paging » est aussi prévu dans les modes « NMO II » et « NMO III », si le réseau indique qu'il supporte la fonctionnalité DTM (« Dual Transfer Mode »).

On rappelle brièvement que la fonctionnalité DTM est une fonctionnalité permettant de supporter simultanément les deux types de services (en mode circuit et en mode paquet), en prévoyant une coordination par le BSS des ressources nécessaires à chacun des modes. Pour une description détaillée de cette fonctionnalité, on pourra aussi se référer aux normes correspondantes.

Ainsi la norme 3G TS 04.60 dans son état actuel prévoit un certain type de coordination de « paging » (utilisant le canal PACCH), pour les modes NMO II et NMO II (c'est-à-dire pour des modes de fonctionnement qui ne nécessitent pas la présence de l'interface « Gs »), à la condition que le réseau supporte la fonctionnalité DTM.

Une telle solution ne constitue cependant pas une solution générale au problème de coordination de « paging » par le BSS.

Notamment, ce type de coordination n'est donc prévu que si la fonctionnalité DTM est supportée. Or ceci ne correspond pas au cas de tous les équipements.

En outre, et ainsi que l'a observé le demandeur, une telle solution présente également les inconvénients et/ou limitations suivants:
- En réalité, il n'est pas nécessaire que la fonctionnalité DTM soit supportée pour qu'une coordination de « paging » puisse être supportée par le BSS.
- Si la coordination de « paging » est supportée sans que la fonctionnalité DTM soit supportée, la station mobile ne peut pas actuellement le savoir, puisque dans l'état actuel de la norme le réseau indique seulement à la station mobile quel est son mode de fonctionnement et si la fonctionnalité DTM est supportée. Dans ces conditions, la station mobile pourrait écouter un canal de recherche alors qu'elle est en mode « Packet Transfer Mode » (et donc qu'un canal de données lui a été alloué), avec pour conséquence possible une perte de blocs de données MAC/RLC envoyés sur ce canal de données, et/ou de message de recherche pour services en mode circuit (ou « CS paging message») qui pourrait être envoyé sur ce canal de données.
- si la coordination de « paging » est supportée, et si la station mobile peut le savoir, il reste qu'une coordination n'est actuellement pas possible dans le cas de station mobile en mode « packet idle mode » et dans le cas de cellule dans laquelle les deux types de canaux de recherche, paquet (PCCCH) et commun (CCCH), sont prévus. En effet, dans ce cas, la station mobile devrait écouter le canal PCCCH pour recevoir des messages de recherche pour services en mode paquet et le canal CCCH pour recevoir des messages de recherche pour services en mode circuit. Une solution serait de ne pas prévoir de canaux PCCCH (en plus des canaux CCCH), mais une telle solution n'est pas satisfaisante, notamment car elle ne permet pas de supporter une augmentation du trafic en mode paquet, et parce qu'elle ne permet pas de bénéficier de fonctionnalités supplémentaires disponibles seulement lorsque les canaux PCCCH sont prévus.

Le document WO 01/10080 A décrit des systèmes et méthodes pour suspendre des communications en mode paquet dans un terminal d'utilisateur configuré pour opérer dans un réseau circuit et dans un réseau paquet. Le réseau paquet est notifié via une interface entre le réseau paquet et le réseau circuit pour suspendre des communications à un terminal d'utiiisateur.

Un besoin existe donc pour éviter tout ou paritie des inconvénients précités, afin d'apporter une solution effective au problème de coordination de « paging » par le BSS (ou réseau d'accès).

La présente invention a notamment pour but de répondre à ce besoin.

Un des objets de la présente invention est ainsi un équipement de réseau d'accès pour système de radiocommunications mobiles, ledit équipement comportant des moyens de coordination de ressources pour services en mode circuit et services en mode paquet, et ledit équipement étant essentiellement caractérisé en ce que lesdits moyens de coordination de ressources sont limités à des moyens pour la coordination de l'envoi, à une station mobile en mode paquet, de messages de recherche pour des services en mode circuit.

Suivant une autre caractéristique, lesdits moyens de coordination d'envoi de messages de recherche permettent de transmettre des messages de recherche pour services en mode circuit dans un canal de données dans le cas de stations mobiles dans le mode appelé « packet transfer mode ».

Suivant une autre caractéristique, lesdits moyens de coordination d'envoi de messages de recherche permettent de transmettre des messages de recherche pour services en mode circuit dans un canal de recherche commun dans le cas de stations mobiles dans le mode appelé « packet idle mode », et dans le cas où un seul type de canal de recherche est prévu, à savoir un canal de recherche commun.

Suivant une autre caractéristique, lesdits moyens de coordination d'envoi de messages de recherche permettent de transmettre des messages de recherche pour services en mode circuit dans un canal de recherche paquet dans le cas de stations mobiles dans le mode appelé « packet idle mode » , et dans le cas où deux types de canaux de recherche sont prévus, à savoir un canal de recherche commun et un canal de recherche paquet.

Suivant une autre caractéristique, ledit système est de type GSM/GPRS, et ledit réseau d'accès est de type BSS (« Base Station Sub-System »).

Un autre objet de la présente invention est un procédé pour la coordination de l'envoi, à un station mobile en mode paquet, de messages de recherche pour services en mode circuit, dans un système de radiocommunications mobiles, ledit procédé étant essentiellement caractérisé en ce qu'il comporte les étapes suivantes :
- le réseau d'accès indique aux stations mobiles s'il supporte une telle coordination,
- si le réseau d'accès supporte une telle coordination, les stations mobiles n'écoutent pas les canaux de recherche lorsqu'elles sont dans le mode appelé « packet transfer mode ».

Suivant une autre caractéristique, les stations mobiles reçoivent lesdits messages de recherche pour services en mode circuit dans un canal de données lorsqu'elles sont dans le mode appelé « packet transfer mode ».

Suivant une autre caractéristique, lorsque les stations mobiles sont dans le mode appelé « packet idle mode », et lorsqu'un seul type de canal de recherche est prévu, à savoir un canal de recherche commun, les stations mobiles reçoivent lesdits messages de recherche pour services en mode circuit dans le canal de recherche commun.

Suivant une autre caractéristique, dans le cas de stations mobiles dans le mode appelé « packet idle mode » , et dans le cas où deux types de canaux de recherche sont prévus, à savoir un canal de recherche commun et un canal de recherche paquet, les stations mobiles reçoivent des messages de recherche pour services en mode circuit dans un canal de recherche paquet.

Suivant une autre caractéristique, ledit système est de type GSM/GPRS, et ledit canal de données est de type PDCH («Packet Data CHannel»).

Suivant une autre caractéristique, ledit système est de type GSM/GPRS, et ledit canal de recherche commun est de type CCCH («Common Control CHannel»), et ledit canal de recherche paquet de type PCCCH («Packet Common Control CHannel»).

Un autre objet de la présente invention est un système de radiocommunications mobiles comportant des moyens pour mettre en oeuvre un tel procédé.

Un autre objet de la présente invention est un équipement de réseau pour système de radiocommunications mobiles, comportant des moyens pour mettre en oeuvre un tel procédé.

Un autre objet de la présente invention est une station mobile pour système de radiocommunications mobiles, comportant des moyens pour mettre en oeuvre un tel procédé.

Un autre objet de la présente invention est un procédé pour la coordination de l'envoi, à une station mobile en mode paquet, de messages de recherche pour des srevices en mode circuit, dans un système de radiocommunications mobiles, ledit procédé étant essentiellement caractérisé en ce qu'il comporte les étapes suivantes :
- une station mobile qui s'est attachée en mode paquet en informe une entité du réseau, en charge de la gestion d'appels pour services en mode circuit,
- ladite information est adjointe à un message de recherche pour services en mode circuit, tel que reçu par le réseau d'accès,
- deux types de canaux de recherche étant prévus, à savoir des canaux dits de recherche communs et des canaux dits de recherche paquet, si ladite information indique que la station mobile est attachée en mode paquet, alors le réseau d'accès transmet à la station mobile ledit message de recherche pour des services en mode circuit sur un canal de recherche paquet.

Suivant une autre caractéristique, les stations mobiles reçoivent lesdits messages de recherche pour services en mode circuit dans un canal de données lorsqu'elles sont dans le mode appelé « packet transfer mode ».

Suivant une autre caractéristique, lorsque les stations mobiles sont dans le mode appelé « packet idle mode », et lorsqu'un seul type de canal de recherche est prévu, à savoir un canal de recherche commun, les stations mobiles reçoivent lesdits messages de recherche pour services en mode circuit dans le canal de recherche commun.

Suivant une autre caractéristique, ledit système est de type GSM/GPRS, et ladite entité en charge de la gestion d'appels pour services en mode circuit est de type MSC (« Mobile Switching Center»).

Suivant une autre caractéristique, ledit système est de type GSM/GPRS, et ledit réseau d'accès est de type BSS (« Base Station Sub-System »).

Suivant une autre caractéristique, ledit système est de type GSM/GPRS, et ledit canal de recherche commun est de type CCCH («Common Control CHannel»), et ledit canal de recherche paquet de type PCCCH («Packet Common Control CHannel»).

Un autre objet de la présente invention est un système de radiocommunications mobiles comportant des moyens pour mettre en oeuvre un tel procédé.

Un autre objet de la présente invention est un équipement de réseau pour système de radiocommunications mobiles, comportant des moyens pour mettre en oeuvre un tel procédé.

Un autre objet de la présente invention est une station mobile pour système de radiocommunications mobiles, comportant des moyens pour mettre en oeuvre un tel procédé.

D'autres objets et caractéristiques de la présente invention apparaîtront à la lecture de la description suivante d'exemples de réalisation, faite en relation avec les dessins ci-annexés dans lesquels:
- la figure 1 (décrite précédemment) est un schéma destiné à rappeler l'architecture générale d'un système cellulaire de radiocommunications mobiles de type GSM/GPRS,
- la figure 2 est un schéma destiné à illustrer un exemple de procédé suivant l'invention,

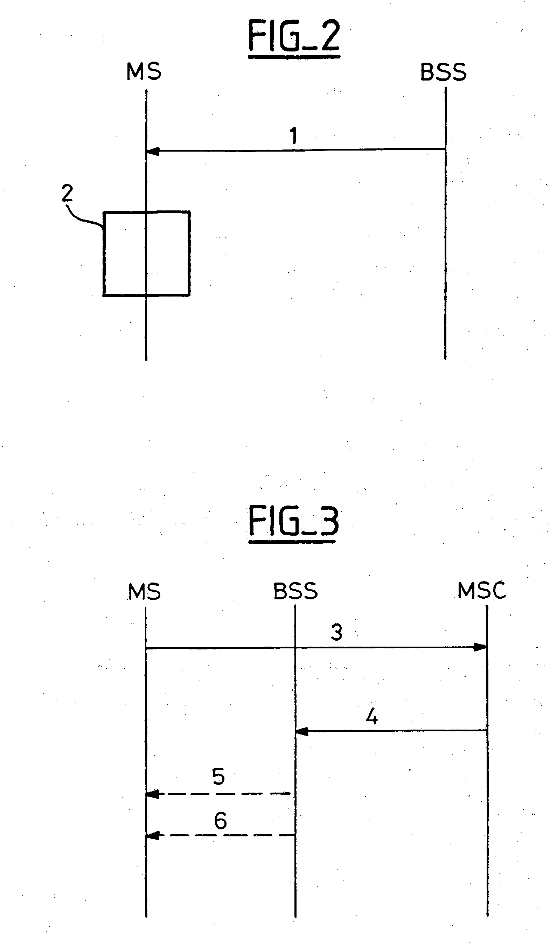

- la figure 2 est un schéma destiné à illustrer un autre exemple de procédé suivant l'invention.

L'invention concerne donc la coordination de recherche ou « paging » par le BSS (ou réseau d'accès) dans un système de radiocommunications mobiles.

Suivant un premier aspect, notamment dans un système de type GSM/GPRS, l'invention suggère qu'il n'est pas nécessaire que la fonctionnalité DTM soit supportée pour qu'une coordination de « paging » puisse être supportée par le BSS.

Ainsi un premier objet de l'invention est un équipement de réseau d'accès pour système de radiocommunications mobiles, cet équipement comportant essentiellement des moyens de coordination de ressources pour services en mode circuit et en mode paquet, ces moyens étant limités à des moyens pour la coordination de l'envoi, à une station mobile en mode paquet, de messages de recherche pour des services en mode circuit.

Notamment, lesdits moyens de coordination d'envoi de messages de recherche permettent de transmettre des messages de recherche pour services en mode circuit dans un canal de données dans le cas de stations mobiles dans le mode appelé « packet transfer mode ».

Notamment, lesdits moyens de coordination d'envoi de messages de recherche permettent de transmettre des messages de recherche pour services en mode circuit dans un canal de recherche commun dans le cas de stations mobiles dans le mode appelé « packet idle mode », et dans le cas où un seul type de canal de recherche est prévu, à savoir un canal de recherche commun.

Notamment, lesdits moyens de coordination d'envoi de messages de recherche permettent de transmettre des messages de recherche pour services en mode circuit dans un canal de recherche paquet dans le cas de stations mobiles dans le mode appelé « packet idle mode » , et dans le cas où deux types de canaux de recherche sont prévus, à savoir un canal de recherche commun et un canal de recherche paquet.

Notamment, ledit système est de type GSM/GPRS, et ledit réseau d'accès est de type BSS (« Base Station Sub-System »).

Suivant un deuxième aspect, l'invention suggère que si la coordination de « paging » est supportée indépendamment de savoir si la fonctionnalité DTM est supportée, le réseau devrait l'indiquer aux stations mobiles. Sinon, les stations mobiles pourraient écouter les canaux de recherche alors qu'elles sont en mode « Packet Transfer Mode » (et donc qu'un canal de données leur a été alloué), avec pour conséquence une possible perte de blocs de données MAC/RLC envoyés sur ce canal de données, et/ou de messages de recherche pour services en mode circuit (ou « CS paging message») qui pourraient être envoyés sur ce canal de données.

Ainsi un deuxième objet de l'invention est un procédé pour la coordination de l'envoi, à une station mobile en mode paquet, de messages de recherche pour services en mode circuit, dans un système de radiocommunications mobiles, ce procédé comportant essentiellement les étapes suivantes :
- le réseau d'accès indique aux stations mobiles s'il supporte une telle coordination,
- si le réseau d'accès supporte une telle coordination, les stations mobiles n'écoutent pas les canaux de recherche lorsqu'elles sont dans le mode appelé « packet transfer mode ».

En référence à la figure 2, le réseau d'accès AN indique aux stations mobiles MS, dans une étape notée 1, sa capacité à supporter une telle coordination. Par exemple un nouvel indicateur (ou «flag » en anglais) est introduit dans les informations système diffusées par le réseau d'accès sur des canaux dits de diffusion, tels que notamment dans le cas du système GSM/GPRS, les canaux BCCH (« Broadacst Control Channel ») ou PBCCH (« Packet Broadacst Control Channel »). Par exemple, dans le cas du système GSM/GPRS, ceci indique la capacité du BSS à supporter une telle coordination, dans le cas où le mode de fonctionnement du réseau est le mode « NMO II » ou « NMO III ». Ainsi informées, les stations mobiles MS en mode « packet transfer mode » n'écouteront pas (étape 2) les canaux de recherche. Ainsi, dans le cas du système GSM/GPRS, et dans le cas où une telle coordination est supportée, les stations mobiles n'écouteront pas les canaux de recherche commun (PCH) ou paquet (PPCH) lorsqu'elles sont en mode « packet transfer mode ».

Notamment, les stations mobiles reçoivent lesdits messages de recherche pour services en mode circuit dans un canal de données lorsqu'elles sont dans le mode « packet transfer mode ».

Notamment, lorsque les stations mobiles sont dans le mode appelé « packet idle mode », et lorsqu'un seul type de canal de recherche, à savoir un canal de recherche commun est prévu, les stations mobiles reçoivent lesdits messages de recherche pour services en mode circuit dans le canal de recherche commun.

Notamment, dans le cas de stations mobiles dans le mode appelé « packet idle mode » , et dans le cas où deux types de canaux de recherche sont prévus, à savoir un canal de recherche commun et un canal de recherche paquet, les stations mobiles reçoivent des messages de recherche pour services en mode circuit dans un canal de recherche paquet.

Notamment, ledit système étant de type GSM/GPRS :
- ledit canal de données est de type PDCH («Packet Data CHannel»),
- ledit canal de recherche commun est de type CCCH («Common Control CHannel»), et ledit canal de recherche paquet de type PCCCH («Packet Common Control CHannel»).

Suivant un troisième aspect, l'invention propose une solution au problème de coordination de « paging » par le réseau d'accès (BSS), dans le cas de station mobile en mode « packet idle mode » et dans le cas où les deux types de canaux de recherche, paquet (PCCCH) et commun (CCCH), sont prévus.

Un troisième objet de l'invention est ainsi un procédé pour la coordination de l'envoi, à une station mobile en mode paquet, de messages de recherche pour services en mode circuit, dans un système de radiocommunications mobiles, ce procédé comportant essentiellement les étapes suivantes :
- une station mobile qui s'est attachée en mode paquet en informe une entité du réseau, en charge de la gestion d'appels pour services en mode circuit,
- ladite information est adjointe à un message de recherche pour services en mode circuit, tel que reçu par le réseau d'accès,
- deux types de canaux de recherche étant prévus, à savoir des canaux dits de recherche communs et des canaux dits de recherche paquet, si ladite information indique que la station mobile est attachée en mode paquet, alors le réseau d'accès transmet à la station mobile ledit message de recherche pour des services en mode circuit sur un canal de recherche paquet.

Notamment, les stations mobiles reçoivent lesdits messages de recherche pour services en mode circuit dans un canal de données lorsqu'elles sont dans le mode appelé « packet transfer mode ».

Notamment, lorsque les stations mobiles sont dans le mode appelé « packet idle mode », et lorsqu'un seul type de canal de recherche est prévu, à savoir un canal de recherche commun, les stations mobiles reçoivent lesdits messages de recherche pour services en mode circuit dans le canal de recherche commun.

Notamment, ledit système étant de type GSM/GPRS :
- ladite entité en charge de la gestion d'appels pour services en mode circuit est de type MSC (« Mobile Switching Center»),
- ledit réseau d'accès est de type BSS (« Base Station Sub-System »),
- ledit canal de recherche commun est de type CCCH («Common Control CHannel»), et ledit canal de recherche paquet de type PCCCH («Packet Common Control CHannel»).

Par exemple, en référence à la figure 3, une station mobile MS qui s'est attachée GPRS en informe (étape 3) le MSC, par exemple via une procédure de mise à jour de localisation (ou « Location Area Update ») ou une procédure dite de « IMSI Attach » (on pourra également se référere aux normes correspondantes pour plus de détails sur ces procédures). La station mobile peut aussi informer le MSC de ses paramètres appelés paramètres DRX, ces paramètres étant nécessaires pour déterminer les occurrences de « paging » de cette station mobile sur le canal de recherche paquet PPCH (ces paramètres étant également définis dans les normes correspondantes). Inversement, quand la station mobile a effectué une procédure inverse dite de « GPRS Detach », elle informe aussi le MSC qu'elle est détachée GPRS.

Le MSC peut alors envoyer (étape 4) un message de recherche pour services en mode circuit (ou « CS paging message ») au BSS via l'interface A, avec une information indiquant si la station mobile est ou non attachée GPRS. Les paramètres DRX peuvent être ajoutés à cette information. Avec ces informations, le BSS est capable de savoir si un tel message de recherche, pour une station mobile qui n'est pas dans le mode « packet transfer mode », doit être envoyé sur le canal de recherche commun PCH (étape 5) ou sur le canal de recherche paquet PPCH (étape 6), selon que la station mobile est attachée GPRS ou non, les étapes 5 et 6 étant notées en pointillés pour indiquer le choix possible.

On notera que les figures ainsi décrites ne représentent que très schématiquement des exemples de procédés suivant l'invention, seulement dans la mesure nécessaire à la compréhension de l'invention, et sans entrer dans le détail des procédures ou protocoles de signalisation, qui peuvent par ailleurs faire appel à des principes connus dans ces systèmes.

La présente invention a également pour objet, outre de tels procédés, un système de radiocommunications mobiles, ainsi qu'un réseau de radiocommunications mobiles ou une entité ou équipement de réseau de radiocommunications mobiles, et une station mobile, comportant des moyens de mise en oeuvre de tels procédés.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

Enfin, on notera que les différents aspects de l'invention peuvent être utilisés séparément ou en combinaison.

Les caractéristiques de ces différents procédés, systèmes, réseaux ou équipements de réseaux, ou stations mobiles, peuvent également être utilisés séparément ou en combinaison.

## Revendications

1. Procédé pour la coordination de l'envoi, à une station mobile en mode paquet, de messages de recherche pour services en mode circuit, dans un système de radiocommunications mobiles GSM/GPRS, ledit procédé étant **caractérisé en ce qu'**il comporte les étapes suivantes :
- le réseau d'accès (BSS) indique (1) aux stations mobiles (MS) s'il supporte une telle coordination, indépendamment de savoir si la fonctionnalité Dual Transfer Mode, DTM, est supportée, dans le cas où le mode de fonctionnement du réseau est le mode Network Mode of Operation, NMO, II ou le mode NMO III,
- si le réseau d'accès supporte une telle coordination, les stations mobiles n'écoutent pas (2) les canaux de recherche lorsqu'elles sont dans le mode appelé « packet transfer mode ».

2. Procédé selon la revendication 1, **caractérisé en ce que** les stations mobiles reçoivent lesdits messages de recherche pour services en mode circuit dans un canal de données lorsqu'elles sont dans le mode appelé « packet transfer mode ».

3. Procédé selon l'une des revendications 1 ou 2, dans lequel un indicateur est introduit dans les informations système diffusées par le réseau d'accès, indiquant la capacité du réseau d'accès à supporter ladite coordination.

4. Procédé selon l'une des revendications 1 à 3, **caractérisé en ce que** lorsque les stations mobiles sont dans le mode appelé « packet idle mode», et lorsqu'un seul type de canal de recherche est prévu, à savoir un canal de recherche commun, les stations mobiles reçoivent lesdits messages de recherche pour services en mode circuit dans le canal de recherche commun.

5. Procédé selon l'une des revendications 1 à 4, **caractérisé en ce que** dans le cas de stations mobiles dans le mode appelé « packet idle mode », et dans le cas où deux types de canaux de recherche sont prévus, à savoir un canal de recherche commun et un canal de recherche paquet, les stations mobiles reçoivent des messages de recherche pour services en mode circuit dans un canal de recherche paquet.

6. Procédé selon l'une des revendications 2 à 5, **caractérisé en ce que** ledit canal de données est de type PDCH, «Packet Data CHannel»,

7. Procédé selon l'une des revendications 1 a 6, **caractérisé en ce que** lesdits canaux de recherche incluent un canal de recherche commun et un canal de recherche paquet.

8. Procédé selon la revendication 7, **caractérisé en ce que** ledit canal de recherche commun est de type CCCH, «Common Control CHannel», et ledit canal de recherche paquet de type PCCCH, «Packet Common Control CHannel».

9. Equipement de réseau d'accès (BSS) pour système de radiocommunications mobiles GSM/GPRS, **caractérisé par** :
- des moyens pour indiquer aux stations mobiles (MS) sa capacité à supporter une coordination pour l'envoi, à une station mobile en mode paquet, de messages de recherche pour services en mode circuit, indépendamment de savoir si la fonctionnalité Dual Transfer Mode, DTM, est supportée, dans le cas où le mode de fonctionnement du réseau est le mode Network Mode of Operation NMO, II ou le mode NMO III.

10. Equipement de réseau d'accès selon la revendication 9, comportant des moyens pour diffuser des informations système dans lesquelles est introduit un indicateur de la capacité du réseau d'accès à supporter ladite coordination.

11. Station mobile (MS) pour système de radiocommunications mobiles GSM/GPRS, **caractérisé par**:
- des moyens pour recevoir une indication de capacité du réseau d'accès à supporter une coordination pour l'envoi, à une station mobile en mode paquet, de messages de recherche pour services en mode circuit, indépendamment de savoir si la fonctionnalité Dual Transfer Mode DTM, est supportée, dans le cas où le mode de fonctionnement du réseau est le mode Network Mode of Operation NMO, II ou le mode NMO III,
- des moyens pour, si le réseau d'accès supporte une telle coordination, ne pas écouter les canaux de recherche lorsque la station mobile est dans le mode appelé «packet transfer mode ».

12. Station mobile selon la revendication 11, un indicateur de capacité du réseau d'accès à supporter ladite coordination étant introduit dans les informations système diffusées par le réseau d'accès.

13. Station mobile selon l'une des revendications 11 ou 12, comportant des moyens pour recevoir lesdits, messages de recherche pour services en mode circuit dans un canal de données lorsqu'elle est dans le mode appelé « packet transfer mode ».

14. Station mobile selon la revendication 13, ledit canal de données étant de type PDCH, «Pocket Data CHannel».

## Patentansprüche

1. Verfahren zur Koordinierung der Übertragung, von einer Mobilstation im Paketvermittlungsmodus, von Suchnachrichten für Dienste im Leitungsvermittlungsmodus, in einem mobilen Funkkommunikationssystem GSM/GPRS, wobei das besagte Verfahren **dadurch gekennzeichnet ist, dass** es die folgenden Schritte umfasst:
- Das Zugangsnetzwerk (BSS) zeigt (1) den Mobilstationen (MS) an, ob es eine solche Koordinierung unterstützt, unabhängig von der Kenntnis, ob die Funktionalität Dual Transfer Mode, DTM, unterstützt wird, wenn der Betriebsmodus des Netzwerks der Modus "Network Mode of Operation", NMO II oder NMO III ist,
- wenn das Zugangsnetzwerk eine solche Koordinierung unterstützt, hören die Mobilstationen die Suchkanäle nicht ab (2), wenn sie sich in dem sogenannten "Packet Transfer Mode"-Modus befinden.

2. Verfahren nach Anspruch 1, **dadurch gekennzeichnet, dass** die Mobilstationen die besagten Suchnachrichten für Dienste im Leitungsvermittlungsmodus in einem Datenkanal empfangen, wenn sie sich im sogenannten "Packet Transfert Mode"-Modus befinden.

3. Verfahren nach einem der Ansprüche 1 oder 2, wobei in die von dem Zugangsnetzwerk ausgesendeten Systeminformationen ein Indikator eingefügt wird, welcher die Fähigkeit des Zugangsnetzwerks, die besagte Koordinierung zu unterstützen, anzeigt.

4. Verfahren nach einem der Ansprüche 1 bis 3, **dadurch gekennzeichnet, dass**, wenn sich die Mobilstationen in dem sogenannten "Packet Idle Mode"-Modus befinden und nur ein einziger Suchkanal-Typ, d. h. ein gemeinsamer Suchkanal, vorgesehen ist, die Mobilstationen die besagten Suchnachrichten für Dienste im Leitungsvermittlungsmodus in dem gemeinsamen Suchkanal empfangen.

5. Verfahren nach einem der Ansprüche 1 bis 4, **dadurch gekennzeichnet, dass**, wenn sich die Mobilstationen in dem sogenannten "Packet Idle Mode"-Modus befinden und zwei Suchkanal-Typen, d. h. ein gemeinsamer Suchkanal und ein paketorientierter Suchkanal, vorgesehen sind, die Mobilstationen die besagten Suchnachrichten für Dienste im Leitungsvermittlungsmodus in dem paketorientierten Suchkanal empfangen.

6. Verfahren nach einem der Ansprüche 2 bis 5, **dadurch gekennzeichnet, dass** der besagte Datenkanal ein Kanal vom Typ PDCH "Packet Data Channel" ist.

7. Verfahren nach einem der Ansprüche 1 bis 6, **dadurch gekennzeichnet, dass** die besagten Suchkanäle einen gemeinsamen Suchkanal und einen paketorientierten Suchkanal umfassen.

8. Verfahren nach Anspruch 7, **dadurch gekennzeichnet, dass** der besagte gemeinsame Suchkanal ein Kanal vom Typ CCCH "Common Control Channel" ist und der besagte paketorientierte Suchkanal ein Kanal vom Typ PCCCH "Packet Common Control Channel" ist.

9. Zugangsnetzwerk- bzw. BSS-Ausrüstung für mobile Funkkommunikationssysteme GSM/GPRS, **gekennzeichnet durch**:
- Mittel, um den Mobilstationen (MS) ihre Fähigkeit, eine Koordinierung für die Übertragung, an eine sich im Paketvermittlungsmodus befindende Mobilstation, von Suchnachrichten für Dienste im Leitungsvermittlungsmodus zu unterstützen, anzuzeigen, unabhängig von der Kenntnis, ob die Funktionalität Dual Transfer Mode, DTM, unterstützt wird, wenn der Betriebsmodus des Netzwerks der "Network Mode of Operation" NMO II oder NMO III ist.

10. Zugangsnetzwerkausrüstung nach Anspruch 9, umfassend Mittel zum Aussenden von Systeminformationen, in welche ein Indikator für die Fähigkeit des Netzwerks, die besagte Koordinierung zu unterstützen, eingefügt wurde.

11. Mobilstation (MS) für mobile Funkkommunikationssysteme GSM/GPRS, **gekennzeichnet durch**:
- Mittel zum Empfangen einer Angabe der Fähigkeit des Zugangsnetzwerks, eine Koordinierung für die Übertragung, an eine sich im Paketvermittlungsmodus befindende Mobilstation, von Suchnachrichten für Dienste im Leitungsvermittlungsmodus zu unterstützen, unabhängig von der Kenntnis, ob die Funktionalität "Dual Transfer Mode", DTM, unterstützt wird, wenn der Betriebsmodus des Netzwerks der "Network Mode of Operation" NMO II oder NMO III ist,
- Mittel, um, wenn das Zugangsnetzwerk eine solche Koordinierung unterstützt, die Suchkanäle nicht abzuhören, wenn sich die Mobilstation in dem sogenannten "Packet Transfer Mode"-Modus befindet.

12. Mobilstation nach Anspruch 11, wobei ein Indikator der Fähigkeit des Zugangsnetzwerks, die besagte Koordinierung zu unterstützen, in die von dem Zugangsnetzwerk ausgesendeten Informationen eingefügt wird.

13. Mobilstation nach einem der Ansprüche 11 oder 12, umfassend Mittel zum Empfangen der besagten Suchnachrichten für Dienste im Leitungsvermittlungsmodus in einem Datenkanal, wenn sie sich in dem sogenannten "Packet Transfer Mode"-Modus befindet.

14. Mobilstation nach Anspruch 13, wobei der besagte Datenkanal ein Kanal vom Typ PDCH "Packet Data Channel" ist.

## Claims

1. Method for coordinating the sending, to a mobile station in packet-switched mode, of circuit-switched mode service paging messages, in a GSM/GPRS mobile radio communication system, said method being **characterized in that** it comprises the following steps:
- the access network (BSS) indicates (1) to the mobile stations (MS) whether it supports such coordination, independent of knowing whether the Dual Transfer Mode functionality, DTM, is supported, in the event that the operating mode of the network is the mode Network Mode of Operation, NMO, II, or the mode NMO III,
- if the access network supports such coordination, the mobile stations do not listen (2) to the paging channels when they are in the mode called "packet transfer mode".

2. Method according to claim 1, **characterized in that** the mobile stations receive said circuit-switched mode service paging messages in a data channel when they are in the mode called "packet transfer mode".

3. Method according to one of the claims 1 or 2, wherein an indicator is inserted into the system information broadcast by the access network, indicating the capability of the access network to support such coordination.

4. Method according to one of the claims 1 to 3, **characterized in that** when the mobile stations are in the mode called "packet idle mode", and when only one type of paging channel is provided, namely a common paging channel, the mobile stations receive said circuit-switched mode service paging messages in the common paging channel.

5. Method according to one of the claims 1 to 4, **characterized in that** in the case of mobile stations in the mode called "packet idle mode", and in the case where two types of paging channels are provided, namely a common paging channel and a packet paging channel, the mobile stations receive circuit-switched mode service paging messages in a packet paging channel.

6. Method according to one of the claims 2 to 5, **characterized in that** said data channel is a PDCH, Packet Data Channel.

7. Method according to one of the claims 1 to 6, **characterized in that** said paging channels include a common paging channel and a packet paging channel.

8. Method according to claim 7, **characterized in that** said common paging channel is a CCCH, Common Control Channel, and said packet paging channel is a PCCCH, Packet Common Control Channel.

9. Access network equipment (BSS) for a GSM/GPRS mobile radio communications system, **characterized by**:
- means for indicating to the mobile stations (MS) its capability to support coordination for sending, to a mobile station in packet-switched mode, circuit-switched mode service paging messages, independent of knowing whether the Dual Transfer Mode functionality, DTM, is supported, in the event that the operating mode of the network is the mode Network Mode of Operation, NMO, II, or the mode NMO III.

10. Access network equipment according to claim 9, comprising means for broadcasting system information into which an indicator of the access network's capability to support said coordination is inserted.

11. Mobile station (MS) for a GSM/GPRS mobile radio communications system, **characterized by**:
- means for receiving an indication of the access network's capability to support coordination for sending, to a mobile station in packet-switched mode, circuit-switched mode service paging messages, independent of knowing whether the Dual Transfer Mode functionality, DTM, is supported, in the event that the operating mode of the network is the mode Network Mode of Operation, NMO, II, or the mode NMO III.
- means for, if the access network supports such coordination, not listening to the paging channels when the mobile station is in the mode called "packet transfer mode".

12. Mobile station according to claim 11, an indicator of the access network's ability to support said coordination being inserted into the system information broadcast by the access network.

13. Mobile station according to one of the claims 11 or 12, comprising means for receiving said circuit-switched mode service paging messages in a data channel when it is in the mode called "packet transfer mode".

14. Mobile station according to claim 13, said data channel being of PDCH, "Packet Data Channel" type.
